# EUROPEAN PATENT SPECIFICATION

(11) **EP 2 620 284 B1**
(45) Date of publication and mention of the grant of the patent: **13.08.2014**
(21) Application number: 12152370.8
(22) Date of filing: 25.01.2012
(51) Int. Cl.: B41F 33/02, G01N 21/47, G01N 21/86

(54) **Sensor head for a colour proofing apparatus**
Sensorkopf für eine Farbproofingvorrichtung
Tête de capteur pour appareil de vérification des couleurs

(43) Date of publication of application: 31.07.2013
(73) Proprietor: Bobst Bielefeld GmbH, 33609 Bielefeld (DE)
(72) Inventor: Whitelaw, Gordon, Bigola, NSW 2107 (AU); Brusdeilins, Wolfgang, 33659 Bielefeld (DE)
(74) Representative: Ter Meer Steinmeister & Partner

(56) References cited:
- DE-A1- 2 636 420
- US-A1- 2006 033 911

## Description

The invention relates to a sensor head for a colour proofing apparatus, comprising a light source for illuminating a measurement location on a surface of a proof substrate, and a light capturing element arranged to capture light that is reflected from said location.

An apparatus having the features specified in the preamble of claim 1 is known from US 2006/033911 A1.

Before a print run is started on a rotary printing press, it is frequently desired to make a proof that permits to assess the expectable print quality in advance. To that end, an image is printed onto the proof substrate under conditions that are comparable to the conditions of the later print run, and the resulting image on the proof substrate is inspected and/or certain properties of the image, e.g. its colour, are measured, so that the measurement results can be compared to target specifications.

A proofer apparatus configured to make a proof and to measure the colour of a location on the proof has been described in applicant's co-pending European patent application 11 155 963.9 filed on February 25, 2011.

The sensor head that forms the subject matter of the present invention is intended for measuring the colour of a certain location on the proof. In order to obtain reproducible results, the sensor head has its own light source which illuminates the spot on the proof with light of a known spectral composition and intensity that impinges onto the surface of the substrate under a known standard angle, e.g. 45°. In a known sensor head, the light source comprises a circular array of optical waveguides and condensor lenses which focus the light emitted from the waveguides onto the desired spot on the proof. The light capturing element is formed by another optical waveguide having an end aligned on the axis of the circular light source array and extending normal to the plane of the substrate for capturing the light reflected from the substrate and for transmitting the captured light to a remote spectrometer. An objective lens may be provided in front of the end of the light capturing waveguide for limiting the spot on the substrate to which the light capturing element is sensitive.

It is an object of the invention to provide a sensor head that has a simple construction and permits a reliable colour measurement.

According to the invention, the sensor head has a ring member that surrounds the light source and the light capturing element and is slidably guided in the sensor head and adapted to be projected towards the substrate into a position where it engages a stop that is fixed relative to the light source and the light capturing element.

In order to make a colour measurement, the substrate and the sensor head are brought into a relative position in which the location on the proof of which the colour is to be measured is in the focus of the light capturing element. Then, the ring member is projected so that it engages the substrate and abuts against the stop. In this way, the ring member serves as a light shield that assures that the spot on the substrate is illuminated only be the light from the light source of the sensor head and is not exposed to any ambient light. Moreover, the ring member holds the substrate in a position in which the distance between the substrate and the light capturing element corresponds exactly to the focal length of the light capturing element. When the colour measurement has been performed, the ring member is retracted again, so that the substrate may be moved on.

More specific optional features of the invention are indicated in the dependent claims.

The sensor head may include one or more pneumatic actuators for projecting and retracting the ring member.

The light source is preferably formed by an array of low-index optical waveguides which have obtuse ends directed towards the desired spot on the substrate. Thanks to their low index of refraction, the waveguides have a small numerical aperture, so that the light emitted from the obtuse ends is sufficiently collimated for illuminating the desired spot on the substrate without any need for additional collimating optical elements such as lenses. Since the light beams emitted from the optical waveguides are still slightly divergent, the size of the illuminated spot depends upon the distance between the light source and the substrate. However, since this distance is defined by means of the ring member with high accuracy, it can be assured that the illuminated spot has just the correct size.

The invention also proposes a proofer apparatus having at least one sensor head with the construction that has been described above. The proofer apparatus further comprises a background member arranged to support the substrate on the side opposite to the light capturing element. This background member also assures that the substrate will always have a constant colour background, so that the colour measurement will not be compromised by a varying background, even if the substrate is transparent or translucent.

In a particularly preferred embodiment the proofer apparatus comprises two sensor heads disposed on opposite sides of the substrate and laterally offset relative to one another such that the ring members of the two sensor heads can mutually serve as background members for the respective other sensor head.

Embodiment examples will now be described in conjunction with the drawings, wherein:
- Fig. 1: is a longitudinal sectional view of a sensor head according to an embodiment of the invention;
- Fig. 2: shows the sensor head according to Fig. 1 in a condition in which a colour measurement can be performed;
- Fig. 3: is a bottom plan view of the sensor head shown in Figs. 1 and 2;
- Fig. 4: is a sectional view of essential parts of a proofer apparatus having two sensor heads;
- Fig. 5: shows the sensor heads according to Fig. 4 in a condition in which colour measurements can be performed; and
- Fig. 6: is a plan view of the sensor heads shown in Figs. 4 and 5.

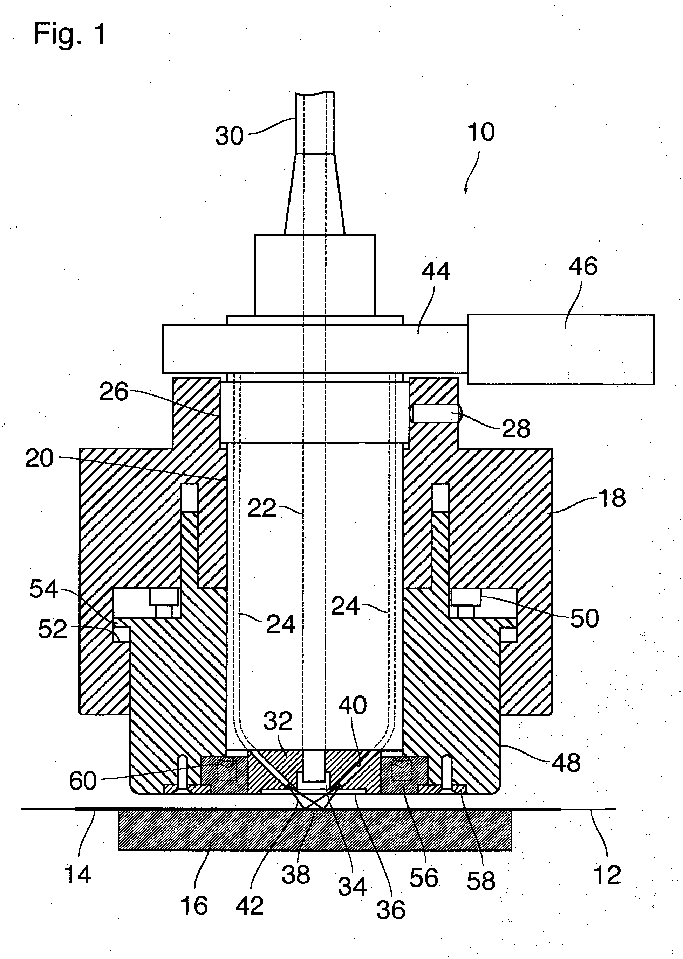

As is shown in Fig. 1, a sensor head 10 is disposed in a colour proofing apparatus above a transport plane 12 along which a web-like proof substrate 14 can be conveyed by means of a conveyer that has not been shown here. The substrate 14 is supported on a stationary background plate 16 that may be formed for example by a ceramic tile having a white top surface. Optionally, the background plate 16 may be movable in vertical direction for facilitating the transport of the substrate 14.

The sensor head 10 has a body 18 that is mounted in a fixed position relative to the transport plane 12 and the background plate 16. A cylindrical sleeve 20 passes through a central bore of the body 18 and accommodates a coaxial arrangement of a central light capturing waveguide 22 and a plurality of illumination waveguides 24 disposed equiangularly around the central waveguide 22. The sleeve 20 has a collar 26 that is firmly held in the body 18 by means of a set screw 28 or any other means that permit to finely adjust the axial position of the sleeve 20 relative to the body 18.

The central waveguide 22 extends into a cable 30 that connects the sensor head 10 to a spectrometer (not shown). On the side of the sensor head 10, the end of the waveguide 22 passes through a cylindrical block 32 (shown in section in Fig. 1) which is attached to the end face of the sleeve 20. The block 32 has a cylindrical recess 34 that accommodates the end face of the waveguide 22 and is covered by a transparent plate 36 on the bottom face of the block 32. Thus, the waveguide 22 serves as a light capturing element capturing light that is reflected from a limited spot (location) 38 on the substrate 14. Optionally, an objective lens may be disposed at the end of the waveguide 22 for collecting the light that is reflected from the spot 38.

The block 32 further forms a conical arrangement of guide bores 40 which converge towards the spot 38 and form an angle of 45° with the substrate plane 12. Each of the guide bores 40 accommodates an end of one of the illumination waveguides 24. The waveguides 24 have obtuse ends cut at right angles to their longitudinal direction. These ends are located immediately in front of the transparent cover plate 36. The material of the waveguides 24 has a low refractive index, so that total reflection at the peripheral wall of the waveguides 24 will occur only for large angles of incidence. Consequently, the direction of propagation of light in the waveguides 24 can only form a relatively small angle with the axis of the waveguide. As a result, the ends of the waveguides 24 inside the block 32, when considered as optical elements, have only a small numerical aperture, so that light beams 42 emitted from these waveguides have only a small angle of divergence. Consequently, each of the waveguides 24 will illuminate a small elliptical area on the spot 38, and the beams 42 of the different waveguides 24 superpose to illuminate the entire spot 38 with sufficient intensity and in a well defined manner.

The top end of the sleeve 22 outside the body 18 forms a distributor 44 in which the waveguides 24 are diverted towards a lamp 46 the light of which is transmitted through the waveguides 24 and projected onto the spot 38. Thus, the waveguides 24 form a light source of the sensor head. As an alternative, the lamp 46 may be disposed at a remote location and may be connected to the cable 30 via an Y-distributor.

The bottom end of the sleeve 22 is surrounded by a ring member 48 that is guided in the body 18 so as to be slidable in axial direction of the sleeve 20. Pneumatic actuators 50 permit to project the ring member 48 towards the substrate plane 12 and to retract it into the body 18. The outmost position (lowermost position in Fig.1) of the ring member 48 is defined by a stop 52 that is formed at the body 18 and co-operates with a collar 54 of the ring member.

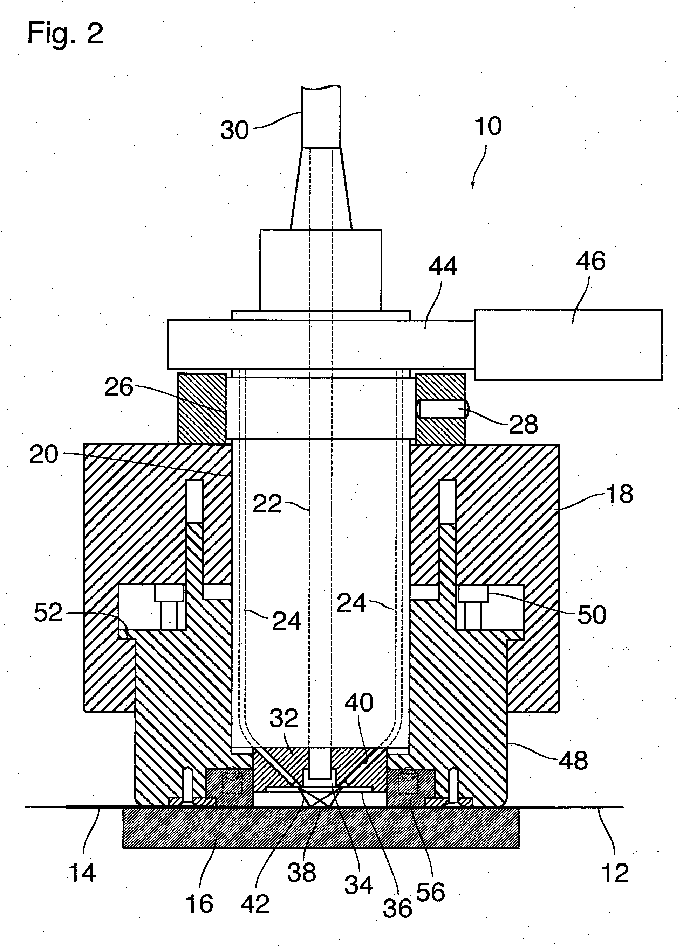

The end face of the ring member 48 facing the substrate plane 12 accommodates a U-shaped plate member 56 that has an end face flush with the end face of the ring member 48. Fig. 2 shows only the cross-sections of the two parallel legs of the U-shaped plate member 56.

Retainer plates 58 are secured to the ring member 48 and, together therewith, define an undercut groove in which the U-shaped plate member 56 can be slid in a direction normal to the plane of the drawing in Fig. 1. Spring-biased detent balls 60 are accommodated in the plate member 56 and co-operate with notches (not shown) in the ring member 48 so as to hold the plate member 56 in position.

In the condition shown in Fig. 1, the end faces of the ring member 48, the retainer plates 58 and the plate member 56 are flush with the surface of the transparent cover plate 36.

When a proof, i.e. the substrate 14 with a test image printed thereon, has been conveyed into the position underneath the sensor head 10 and the colour of the spot 38 shall be measured, the actuators 50 are operated so as to project the ring member 48 downwardly towards the substrate 14. The retainer plate 58 and the plate member 56 participate in this movement whereas the sleeve 20 and the block 32 accommodating the ends of the waveguides 22 and 24 remain stationary.

In Fig. 2, the ring member 48 has reached its lowermost position as defined by the stop 52. In this position, the end face of the ring member engages the surface of the substrate 14 and gently presses the same against the top surface of the background plate 16, thus assuring that the substrate 14 is smoothly spread on the background plate 16 and the spot 38 on the substrate has a well defined distance from the ends of the waveguides 22 and 24. Optionally, the background plate 16 may be arranged to yield and to be biased elastically against the ring member 48. Moreover, the ring member 48 acts as a light shield that reliably shields the spot 38 and the end face of the light capturing waveguide 22 against external light, so that the spectrometer connected to the cable 30 will measure only the light that has been emitted by the light sources, i.e. the waveguides 24, and has been reflected at the spot 38. In this way, it is assured that the colour measurement can be performed under optimal and reproducible conditions.

When the proof is made for reverse printing on a transparent web, the substrate 14 will be transparent, and the printed image will be formed on the bottom side of the substrate, i.e. the side facing the background plate 16. Then, the white surface of the background plate 16 may simulate the effect of a white background layer that, in the actual print run, will be printed onto the web so as to superpose the printed image.

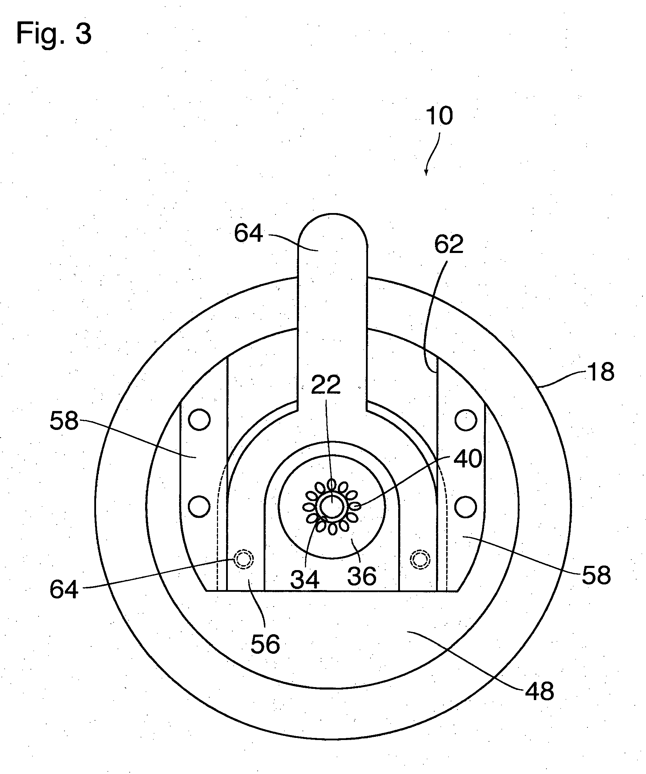

Fig. 3 is a bottom view of the sensor head 10 and shows the U-shaped configuration of the plate member 56. It can be seen that the plate member is slidable in a recess 62 of the ring member 48 and has a tab 64 permitting to pull-out the plate member 56. In the condition shown in Fig. 3, the free ends of the legs of the plate member 56 abut an end of the recess 62, so that the ring member 48 and the plate member 56 together form a light shield that completely encircles the end of the light capturing waveguide 22 and the ends of the bores 40 that serve as light sources.

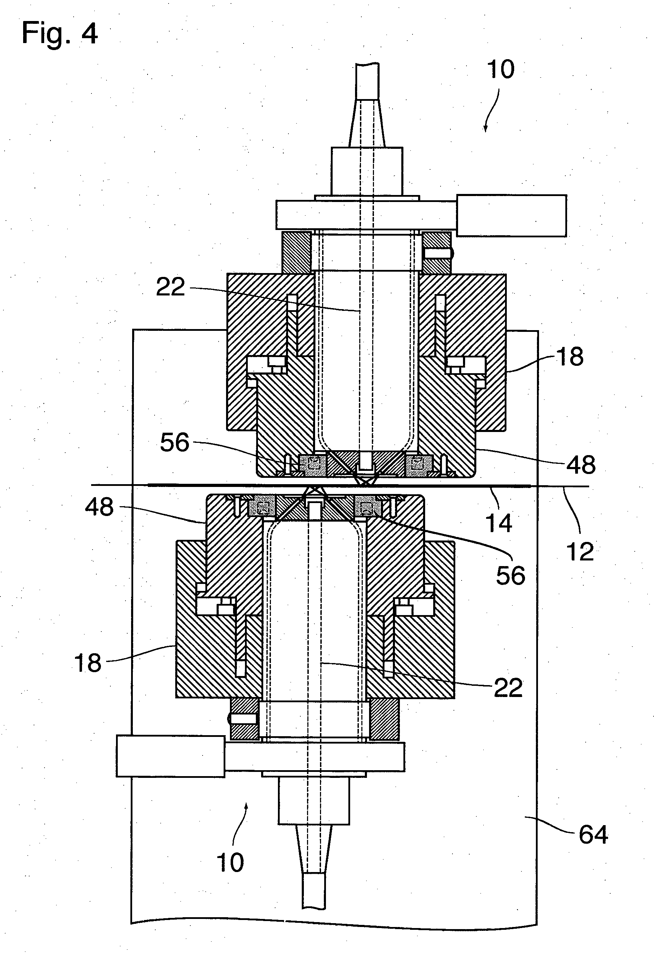

The purpose of the plate member 56 will be explained by reference to Figs. 4 to 6 which show a proofer apparatus with two identical sensor heads 10 that are disposed on opposite sides of the substrate transport plane 12. The bodies 18 of the two sensor heads 10 are rigidly mounted on a common frame 64. The central axes of the sensor heads are offset from one another to such an extent that the end of the light capturing waveguide 22 of the upper sensor head 10 in Fig. 4 faces a leg of the plate member 56 of the lower sensor head, and vice versa. Thus, the plate members 56 serve as background plates comparable to the background plate 16 in Fig. 1. The plate members 56 may be made of ceramics and may have a surface in a certain standard colour, e.g. white. When the colour measurement shall be made against a different background colour, the plate member may be drawn out and replaced by one having a different surface colour.

The proofer apparatus shown in Fig. 4 may be used for colour measurements on either side of the proof. For example, the proofer apparatus as a whole may comprise one or more ink transfer rollers (not shown) which are arranged such that they apply one or more ink layers on the top surface of the substrate 14. In case of direct printing, the upper sensor head 10 will be used for measuring the ink layer on the substrate while the lower sensor head 10 is inoperative and only serves to provide the background plate. In case of reverse printing, a colour film in an image colour will be printed directly on the top surface of the substrate 14, and in actual printing, a white background layer would be superposed on that ink layer. In this case, the lower sensor head 10 is used for measuring the colour of the ink layer through the transparent substrate 14 and against the background provided by the plate member 56 of the upper sensor head.

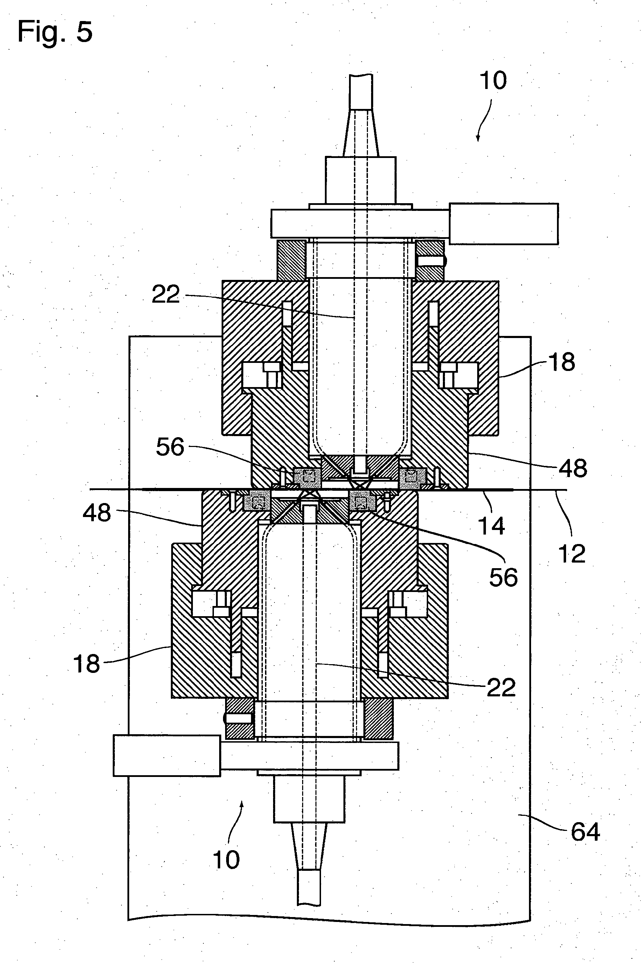

Fig. 4 shows the sensor heads in a condition in which the ring members 48 are retracted, so that the substrate 14 may be conveyed into the gap between the two sensor heads. Then, the ring members 48 will be projected so that they engage the substrate from both sides, as has been illustrated in Fig. 5. It can be seen that, in this condition, the two ring members 48 and their respective plate members 56 co-operate to form an enclosure that shields both light capturing waveguides 22 from ambient light.

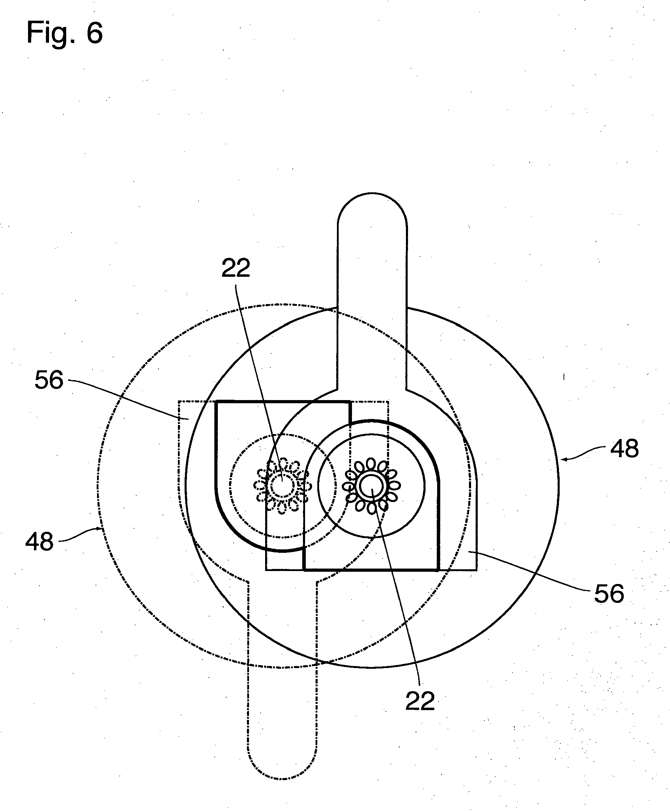

In Fig. 6, the ring member 48 and the plate member 56 of the upper sensor head in Figs. 4 and 5 have been shown in continuous lines, and the relative positions of the ring member 48 and the plate member 56 of the other sensor head have been shown in phantom lines so as to illustrate how these members co-operate to form a light shield. For illustration purposes, the contour of the light shield has been highlighted in bold lines in Fig. 6.

In a modified embodiment, it would also be possible to configure the plate members 56 such that their U-shaped internal contours do not overlap, so that two separate light shields are formed for the two waveguides 22. In that case, it would even be possible to make colour measurements with both sensor heads simultaneously without any risk that illumination light from one sensor head enters into the light capturing element of the other sensor head.

## Claims

1. A sensor head (10) for a colour proofing apparatus, comprising a light source (24) for illuminating a measurement location (38) on a surface of a proof substrate (14), and a light capturing element (22) arranged to capture light that is reflected from said measurement location (38), **characterized in that** the sensor head (10) has a ring member (48) that surrounds the light source (24) and the light capturing element (22) and is slidably guided in the sensor head and adapted to be projected towards the substrate (14) into a position where it engages a stop (52) that is fixed relative to the light source (24) and the light capturing element (22).

2. The sensor head according to claim 1, comprising a pneumatic actuator (50) for projecting the ring member (48).

3. The sensor head according to claim 1 or 2, wherein the stop (52) is formed on a body (18) of the sensor head (10) that slidably accommodates the ring member (48).

4. The sensor head according to any of the preceding claims, wherein the light capturing element (22) is formed by an end of an optical waveguide.

5. The sensor head according to any of the preceding claims, wherein the light source (24) is formed by a circular array of optical waveguides disposed around the light capturing element (22) and arranged to converge towards the measurement location (38).

6. The sensor head according to claims 4 and 5, wherein the waveguides forming the light capturing element (22) and the light source (24) are accommodated in a common sleeve (20) that is fixed in a body (18) of the sensor head in an axially adjustable position.

7. The sensor head according to claim 6, wherein the optical waveguides forming the light source (24) are low-index waveguides the ends of which are directed onto the measurement location (38) so as to illuminate said measurement location without intervention of a condensor lens.

8. A proofer apparatus comprising at least one sensor head (10) according to any of the preceding claims.

9. The proofer apparatus according to claim 8, comprising a transport plane (12) for a substrate (14) and at least two sensor heads (10) disposed on opposite sides of the transport plane (12).

10. The proofer apparatus according to claim 9, wherein each sensor head (10) has a plate member (56) arranged to form a background for a measurement location (38) on the substrate (14) that is to be measured with the respective other sensor head.

11. The proofer apparatus according to claim 10, wherein the plate members (56) form part of the ring members (48).

12. The proofer apparatus according to claim 11, wherein the plate members (56) are removably held in the ring members (48).

13. The proofer apparatus according to claim 11 or 12, wherein the plate members (56) have a U-shaped configuration.

14. The proofer apparatus according to any of the claims 10 to 13, wherein the sensor heads (10) have an identical construction and are offset relative to one another such that the light capturing element (22) of each sensor head opposes the plate member (56) of the other sensor head.

## Patentansprüche

1. Sensorkopf für eine Farbproofingvorrichtung, mit einer Lichtquelle (24) zum Beleuchten eines Messortes (38) auf einer Oberfläche eines Proofsubstrats (14), und einem lichtaufnehmenden Element (22), das dazu eingerichtet ist, Licht aufzunehmen, das von dem Messort (38) reflektiert wird, **dadurch gekennzeichnet, dass** der Sensorkopf ein Ringelement (48) aufweist, das die Lichtquelle (24) und das lichtaufnehmende Element (22) umgibt und verschiebbar in dem Sensorkopf geführt ist und dazu eingerichtet ist, in Richtung auf das Substrat (14) in eine Position vorgeschoben zu werden, in der es an einem in Bezug auf die Lichtquelle (24) und das lichtaufnehmende Element (22) festen Anschlag (52) anliegt.

2. Sensorkopf nach Anspruch 1, mit einem pneumatischen Stellglied (50) zum Vorschieben des Ringelements (48).

3. Sensorkopf nach Anspruch 1 oder 2, bei dem der Anschlag (52) an einem Körper des Sensorkopfes (10) gebildet ist, der das Ringelement (48) verschiebbar aufnimmt.

4. Sensorkopf nach einem der vorstehenden Ansprüche, bei dem das lichtaufnehmende Element (22) durch ein Ende eines optischen Wellenleiters gebildet wird.

5. Sensorkopf nach einem der vorstehenden Ansprüche, bei dem die Lichtquelle (24) durch eine kreisförmige Anordnung von optischen Wellenleitern gebildet wird, die so um das lichtaufnehmende Element (22) herum angeordnet sind, dass sie in Richtung auf den Messort ((38) konvergieren.

6. Sensorkopf nach den Ansprüchen 4 und 5, bei dem die Wellenleiter, die das lichtaufnehmende Element (22) und die Lichtquelle (24) bilden, in einer gemeinsamen Hülse (20) aufgenommen sind, die in einer axial einstellbaren Position in einem Körper (18) des Sensorkopfes fixiert ist.

7. Sensorkopf nach Anspruch 6, bei dem die optischen Wellenleiter, die die Lichtquelle (24) bilden, Wellenleiter mit niedrigem Brechungsindex sind, deren Enden so auf den Messort (38) gerichtet sind, dass sie den Messort ohne Zwischenfügung einer Kondensorlinse beleuchten.

8. Proofingvorrichtung mit wenigstens einem Sensorkopf nach einem der vorstehenden Ansprüche.

9. Proofingvorrichtung nach Anspruch 8, die eine Transportebene (12) für ein Substrat (14) und wenigstens zwei Sensorköpfe (10) aufweist, die auf entgegengesetzten Seiten der Transportebene (12) angeordnet sind.

10. Proofingvorrichtung nach Anspruch 9, bei der jeder Sensorkopf (10) ein Plattenelement (56) aufweist, das dazu eingerichtet ist, einen Hintergrund für einen Messort (38) auf dem Substrat (14) zu bilden, der mit dem jeweiligen anderen Sensorkopf zu messen ist.

11. Proofingvorrichtung nach Anspruch 10, bei der die Plattenelemente (56) Teil der Ringelemente (48) sind.

12. Proofingvorrichtung nach Anspruch 11, bei der die Plattenelemente (56) lösbar in den Ringelementen (48) gehalten sind.

13. Proofingvorrichtung nach Anspruch 11 oder 12, bei der die Plattenelemente (56) eine U-förmige Gestalt haben.

14. Proofingvorrichtung nach einem der Ansprüche 10 bis 13, bei der die Sensorköpfe (10) einen identischen Aufbau haben und in der Weise relativ zueinander versetzt sind, dass das lichtaufnehmende Element (22) jedes Sensorkopfes dem Plattenelement (56) des anderen Sensorkopfes gegenüberliegt.

## Revendications

1. Tête de détection (10) pour dispositif de tirage d'épreuves couleur, comportant une source de lumière (24) pour éclairer une zone de mesure (38) sur une surface d'un substrat (14) d'épreuve, et un élément d'interception (22) de lumière conçu pour intercepter la lumière réfléchie par ladite zone de mesure (38), la tête de détection (10) étant **caractérisée en ce qu'**elle a un éléments annulaire (48) qui entoure la source de lumière (24) et l'élément d'interception (22) de lumière et est guidé par coulissement dans la tête de détection et conçu pour être amené à faire saillie vers le substrat (14) dans une position où il vient contre une butée (52) qui est fixe par rapport à la source (24) de lumière est à l'élément d'interception (22) de lumière.

2. Tête de détection selon la revendication 1, comportant un actionneur pneumatique (50) pour amener l'élément annulaire (48) à faire saillie.

3. Tête de détection selon la revendication 1 ou 2, dans laquelle la butée (52) est formée sur un corps (18) de la tête de détection (10) qui supporte d'une manière coulissante l'élément annulaire (48).

4. Tête de détection selon l'une quelconque des revendications précédentes, dans laquelle l'élément d'interception (22) de lumière est formé par une extrémité d'un guide d'onde optique.

5. Tête de détection selon l'une quelconque des revendications précédentes, dans laquelle la source (24) de lumière est formée par un ensemble circulaire de guides d'onde optiques disposés autour de l'élément d'interception (22) de lumière et conçus pour converger vers la zone de mesure (38).

6. Tête de détection selon les revendications 4 et 5, dans laquelle les guides d'onde formant l'élément d'interception (22) de lumière et la source (24) de lumière sont logés dans un manchon commun (20) qui est fixé, dans une position à régalage axial, dans un corps (18) de la tête de détection.

7. Tête de détection selon la revendication 6, dans laquelle les guides d'onde optiques formant la source (24) de lumière sont des guides d'onde à faible indice dont les extrémités sont orientées vers la zone de mesure (38) de manière à éclairer ladite zone de mesure sans l'intermédiaire d'une lentille-condenseur.

8. Dispositif de tirage d'épreuves comportant au moins une tête de détection (10) selon l'une quelconque des revendications précédentes.

9. Dispositif de tirage d'épreuves selon la revendication 8, comportant un plan de transport (12) pour un substrat (14) et au moins deux têtes de détection (10) disposées de part et d'autre du plan de transport (12).

10. Dispositif de tirage d'épreuves selon la revendication 9, dans lequel chaque tête de détection (10) a un élément formant une plaque (56) conçu pour former un arrière-plan pour une zone de mesure (38) sur le substrat (14) à mesurer avec l'autre tête de mesure respective.

11. Dispositif de tirage d'épreuves selon la revendication 10, dans lequel les éléments formant des plaques (56) font partie des éléments annulaires (48).

12. Dispositif de tirage d'épreuves selon la revendication 11, dans lequel les éléments formant des plaques (56) sont retenus d'une manière amovible dans les éléments annulaires (48).

13. Dispositif de tirage d'épreuves selon la revendication 11 ou 12, dans lequel les éléments formant des plaques (56) ont une configuration en forme de U.

14. Dispositif de tirage d'épreuves selon l'une quelconque des revendications 10 à 13, dans lequel les têtes de détection (10) ont une structure identique et sont décalées l'une par rapport à l'autre de telle sorte que l'élément d'interception (22) de lumière de chaque tête de détection soit en regard de élément formant une plaque (56) de l'autre tête de détection.
